# EUROPEAN PATENT APPLICATION

(11) **EP 4 056 536 A1**
(43) Date of publication of application: **14.09.2022**
(21) Application number: 21161657.8
(22) Date of filing: 10.03.2021
(51) Int. Cl.: C03B 3/00, F27B 9/00, B09B 3/00, B09B 5/00

(54) **METHOD AND APPARATUS FOR MANUFACTURING A PRODUCT AND USE**

(71) Applicant: Wimao Oy, 54190 Konnunsuo (FI)
(72) Inventor: Olkkonen, Veikko, 53850 Lappeenranta (FI); Varis, Jussi, 54190 Konnunsuo (FI); Mirola, Pekka, 54190 Konnunsuo (FI); Malinen, Jarmo, 54190 Konnunsuo (FI); Höijer, Juha, 54190 Konnunsuo (FI); Varis, Juha, 53100 Lappeenranta (FI); Kärki, Timo, 54190 Konnunsuo (FI); Immonen, Ville, 54190 Konnunsuo (FI)
(74) Representative: Papula Oy

(57) **Abstract**

The invention relates to a method and an apparatus for manufacturing a product from a starting material. At least one material batch (4) is collected onto a conveyor (2) from material portions (1), the conveyor is arranged to move through a heating device (5) to heat the material batch to a desired temperature and/or to maintain a desired temperature in the material batch, and the conveyor is moved to transfer the material batch to a product manufacturing device (6) in which the product is manufactured from the material batch by a shape-giving tool. In addition, the invention relates to the use of the method.

## Description

### FIELD

The invention relates to a method as defined in claim 1 and an apparatus as defined in claim 8 for manufacturing a product from a starting material, and use of the method as defined in claim 18.

### BACKGROUND

Various methods and devices are known in the prior art for manufacturing various material mixes and for forming an end product, e.g. a composite product, from the material mix.

In addition, various devices are known in the prior art for transferring material mixes to the manufacture of an end product.

### OBJECT

The object is to disclose a new type of a method and apparatus to form material portions and transfer the material portions to the manufacture of a shaped product. Another object is to disclose a method and apparatus to transfer the material portions in an efficient manner to the manufacture of a product and form the product cost- and energy-efficiently from the material portions. Another object is to disclose a method and apparatus to improve a continuously-operated product manufacturing process, wherein material loss may be reduced. Another object is to disclose a flexible manufacturing process for manufacturing various end products.

### SUMMARY

The method and apparatus and the use are characterized by the features presented in the claims.

In the method and the apparatus, a material batch is collected from material portions and a warm material batch is transferred to the manufacture of a product, wherein a shape is given to the product.

### DETAILED DESCRIPTION

In a method for manufacturing a product from a starting material, at least one material batch is collected, preferably by piling or by arranging in another way, onto a conveyor from material portions, the conveyor is arranged to move through a heating device to heat the material batch to a desired temperature and/or to maintain a desired temperature in the material batch, and the conveyor is moved to transfer the material batch to a product manufacturing device in which the product, e.g. an end product or a part thereof, is manufactured from the material batch by a shape-giving tool, e.g. by giving a shape to the product. The product may be formed continuously or in cycles. In one embodiment the material portions are formed and/or transferred to the conveyor continuously.

An apparatus for manufacturing a product from a starting material may comprise at least one conveyor onto which a material batch is collected, e.g. by piling or by arranging in another way, from material portions and which is moved to transfer the material batch to a product manufacturing device, at least one heating device through which the conveyor is arranged to move to heat the material batch to a desired temperature and/or to maintain a desired temperature in the material batch, and at least one product manufacturing device which comprises at least a shape-giving tool and in which the product, e.g. an end product or a part thereof, is manufactured from the material batch by the shape-giving tool. By the apparatus the product may be formed continuously or in cycles.

The starting material in the material portions may be any starting material. The starting material may contain one or more components. In one embodiment the starting material is a heterogeneous material. The starting material may comprise a recyclable, reusable and/or virgin material component. In one embodiment the starting material comprises at least one recyclable and/or reusable component, e.g. a waste component. In one embodiment the starting material consists of mainly recyclable or reusable components. In one embodiment the starting material is a composite material, and it is formed into a composite product. In one embodiment the components of the starting material may have been selected from the following: fibre-based component, polymer-based component, wood-based component, textile-based component, rock-based component, or different combinations thereof. In one embodiment the starting material contains at least one fibre-based component. In one embodiment the starting material contains at least one polymer-based component, such as recycled plastic and/or waste plastic. In one embodiment the starting material consists of recycled plastic. Alternatively, the starting material may comprise any suitable starting material components. The starting material comprises at least one constituent functioning as a binder. The constituent functioning as a binder may be a starting material component or a constituent of a starting material component.

In this connection, the material portion refers to any material portion or the like which may have been formed from any suitable starting material. The size, dimensions, weight or volume of the material portion may vary. Preferably, the size and shape of the material portion are predetermined, or the size and shape of the material portion may be adjusted during the process. The material portion may be in the form of an extrusion pressing article, extrudate, extruded article, agglomerate, a solid block, a block, stiff mass, mouldable mass or elastic mass or in the form of a combination thereof. In one embodiment the material of the material portions is a composite material, and a composite product is formed from the material portions. In this connection, the material portions do not refer to material portions used for the preparation of food or food products.

In this connection, the material batch refers to any material batch or the like which is formed from the material portions, and which comprises more than one material portion. The material portions in the material batch may be the same size and/or the same shape. Alternatively, the material portions may differ in size and shape, but their size and shape are preferably predetermined, preferably depending on the product for the manufacture of which the material batch is intended. The material batch may be collected in a desired arrangement onto the conveyor. In one embodiment the material batch is piled in the form of a pile, heap, stack or the like onto the conveyor. In one embodiment the material batch is arranged onto the conveyor so that the material portions are in one layer on the conveyor. In one embodiment the material portions are arranged according to a predetermined weight distribution, whereby material is provided in the right places according to the shape-giving requirements of the product and/or in relation to the weight distribution of the end product.

The material portions are arranged on the conveyor to form the material batch. In one embodiment the material portions are transferred to the conveyor to form the material batch. In one embodiment the material portions are fed to the conveyor. In one embodiment the material portions are ready, pre-formed material portions, e.g. material blocks, material mass portions, extrusion pressing articles, extrudates, extruded articles, agglomerates, solid blocks or other suitable portions. In one embodiment the material portions are formed in connection with the method and the apparatus.

In one embodiment the material portions are formed by a material portions forming device. In one embodiment the apparatus comprises at least one material portions forming device for forming the material portions from the starting material. The apparatus may comprise more than one material portions forming device, and in that case the material portions forming devices may have been arranged in parallel, or alternatively the apparatus comprises material portions forming devices disposed one after the other. The forming device may be any suitable device in which a material and portions suitable for the material portions are formed from the starting material, e.g. a heat treatment device, extrusion device, extrusion pressing device, mixing device, another suitable device or a combination thereof. In one embodiment the material portions are formed continuously. In one embodiment the material portions are formed by means of at least heat from a desired starting material. In one embodiment the material portions are formed by means of heat and extrusion pressing, e.g. by means of a mixer device or extrusion, from a desired starting material. In one embodiment the material portions are formed from a material, e.g. a material flow or the like, formed from the starting material by cutting into suitable material portions of desired sizes, e.g. into material blocks, extrusion pressing articles or the like. In this connection, the material flow formed from the starting material may be any material agglomeration, material flow, material profile, extrusion pressing article flow or other corresponding continuous material from which the portions may be formed by cutting, such as by slicing.

In one embodiment the material portions are formed by the material portions forming device by treating the starting material by means of heat and/or extrusion and by cutting the material portions from the material, e.g. material flow, having been formed. In one embodiment the material portions are formed by cutting, e.g. by slicing, pressing or by cutting in another way, the portions and the portions having been formed are arranged on the conveyor, e.g. in a predetermined order. In one embodiment the material portions are cut by means of a cutting device, e.g. a slicer, slicing device or another suitable cutting device. In one embodiment the apparatus comprises at least one cutting device for forming the material portions. In one embodiment the material portions forming device comprises a cutting function or a cutting device. The cutting device may be any suitable device by which the material portions may be formed by cutting, slicing or in another corresponding way. In one embodiment the cutting device is a slicing device utilizing ultrasound. By means of the cutting and the cutting device, a desired gap may be arranged between the material portions before piling them on the conveyor. In one embodiment the cutting device comprises a gap forming mechanism for arranging the gaps between the material portions being formed. In one embodiment the apparatus comprises at least one gap forming mechanism or gap forming device for arranging the gaps between the material portions. Arranging the gaps between the material portions may be done in connection with transferring the material portions, e.g. in connection with transfer from the material portions forming device or in connection with feeding the material portions, or alternatively in connection with the cutting device.

In one embodiment the material portions are dispensed to the conveyor. In one embodiment the apparatus comprises a dispensing device or the material portions forming device comprises a dispensing device for dispensing the material portions. In one embodiment the material of the material portions is first formed from the starting material by means of the material portions forming device and after that the material portions are dispensed by means of the dispensing device. By means of the dispensing and the dispensing device, a desired gap may be arranged between the material portions.

In one embodiment a material mix is formed from the starting materials. The material mix may be formed in the material portions forming device or alternatively in a separate mixing device before the material portions forming device. In one embodiment the apparatus comprises a material mix mixing device or the material portions forming device comprises a material mix forming section. In one embodiment the material mix is first formed from the starting material and after that the material portions are formed by means of the material portions forming device. In one embodiment the material mix mixing device and the material portions forming device are part of the same device. In one embodiment the material mix mixing device, the material portions forming device and the dispensing device are part of the same device. In one embodiment a continuous material flow is produced from the material mix, from which material flow the material portions are formed.

In one embodiment the material portions forming device is an extruder. In one embodiment the material mix is produced from the starting materials in the extruder. In one embodiment the material mix mixing device is arranged before the extruder. In one embodiment the extruder dispenses the material portions. In one embodiment the dispensing device is arranged after the extruder to dispense the material portions. In one embodiment the material portions are cut in the extruder. In one embodiment the cutting device is arranged after the extruder to cut the material portions. In one embodiment the material portions forming device may be a mixer device known per se or another suitable forming device.

In one embodiment the material portions are formed from a material profile. Preferably, the material profile is formed by means of at least heat in the forming device, e.g. by means of extrusion pressing or extrusion moulding. In one embodiment the material portions are formed from the material profile by cutting the portions of a desired size from the profile.

In one embodiment the material portions are transferred to the conveyor to form the material batches. In one embodiment the material portions are transferred from the material portions forming device, the dispensing device or the cutting device to the conveyor. In one embodiment the material portions are cut and transferred to the conveyor. In one embodiment the material portions are directly dispensed to the conveyor. In one embodiment the material portions are formed by dispensing the material being used for the material portions in a desired amount by volume or weight. In one embodiment the material portion is formed by dispensing a mass, e.g. an elastic, plastic and/or warm material, in a desired amount, e.g. by volume, by weight, by length of the material mass, by length of the material profile or by a specific run time.

The material portions forming device, the dispensing device and/or the cutting device may be any device suitable for the purpose and known per se.

In one embodiment the apparatus comprises at least one sensor, e.g. a laser sensor or a light sensor, by means of which the cutting of the material portion, such as cutting length of the material flow, is adjusted. For example, by means of a laser sensor the speed and length of the material flow, e.g. a web, coming from the material portions forming device may be scanned, and then the speed of a belt arranged after the forming device and/or the cutting length of the material portions can be adjusted. The cutting is performed, e.g. the slicer is switched on, when the material flow reaches a correct length. Alternatively, for example when a light sensor is used, the adjustment is performed so that the cutting takes place when the end of the material flow reaches a pre-set point of the light sensor. The advantage is that regardless of the speed of the material portions forming device, the process stages following after the material portions forming device adapt to the speed of the forming device without special adjustment. Thus, only the speed of the material portions forming device needs to be adjusted.

In one embodiment the material portions are transferred to the conveyor by means of a first transfer device. In one embodiment the material portions are transferred from the material portions forming device or the cutting device to the conveyor by means of the first transfer device. In one embodiment the apparatus comprises at least one first transfer device that is arranged to transfer the material portions onto the conveyor. The apparatus may comprise one or more first transfer devices that may have been arranged in parallel or one after the other. In one embodiment the apparatus comprises at least one first transfer device that is arranged between the material portions forming device and the conveyor to transfer the material portions from the forming device onto the conveyor. In one embodiment the apparatus comprises at least one first transfer device that is arranged between the cutting device and the conveyor to transfer the material portions from the cutting device onto the conveyor. In one embodiment the cutting device operates as the first transfer device. Between the material portions, gaps may be arranged by means of a gap forming mechanism, as described above, to facilitate the transferring by means of the transfer device. In one embodiment the transfer device comprises a gap forming mechanism for arranging the gaps between the material portions. The first transfer device may be any transfer device suitable for the purpose. In one embodiment the first transfer device is selected from the following devices: computer-controlled transfer device, remote-controlled transfer device, automatic transfer device, belt conveyor, belt sorter, automatic sorter, batcher, robotic device, industrial robot, manipulator or a combination thereof. In one embodiment the first transfer device is a robotic device, whereby the transfer of the material portions may be done automatically and flexibly and whereby it is easy to change the stacking on the conveyor. In one embodiment the robotic device comprises one or more grippers or there are several compartments in the gripper of the robotic device, whereby several material portions may be transferred at the same time to the conveyor. In one embodiment the transfer device is independently controllable and movable, e.g. by means of a control device and/or software of the apparatus.

One or more material batches may be collected to the conveyor. In one embodiment there may at the same time be more than one material batch on the conveyor. In one embodiment the material batches are collected to the conveyor at a desired and/or predetermined distance or spacing from each other. In one embodiment the material batch is collected to a predetermined place on the conveyor, e.g. to a specific position in relation to the conveyor. In one embodiment the material batch is collected from several small material portions. In one embodiment the material batch is formed from the material portions so that a desired amount of material is provided to the product manufacturing device, e.g. to a desired place in a mould.

In one embodiment the material portions are transferred from more than one material portions forming device and/or cutting device, e.g. from parallel forming devices or parallel cutting devices, to the conveyor. In one embodiment the apparatus comprises one conveyor.

In one embodiment the conveyor is selected from the following: a movable surface, belt, belt system, conveyor belt, corresponding conveyor device, another suitable conveyor or a combination thereof which is movable to transfer the material batch to the product manufacturing device. In one embodiment the conveyor is formed from more than one conveyor sections arranged one after the other to form a continuous conveyor. In one embodiment, each conveyor section is independently controllable. In one embodiment the conveyor or a conveyor section thereof moving through the heating device is arranged to make a reciprocating movement, whereby the material batch may at intervals be transferred to the heating and brought back for additional material batch formation. Transferring the material batch as described above at intervals to the heating and bringing it back may be repeated one or more times during the collection, such as piling, of the material batch. When the material batch is brought back, a material portion or portions may be added thereto, e.g. by means of the first transfer device.

In one embodiment the surface of the conveyor is provided with an anti-adhesive coating in order that the material portions and batches do not adhere to the surface of the conveyor.

The apparatus comprises at least one heating device for keeping the material batch at a desired temperature and/or for heating it. Preferably, the temperature of the material batch is kept at a desired level during the time on the conveyor and up to the product manufacturing device. The heating device may be any heating device suitable for the purpose. In one embodiment the heating device is arranged to heat the material batch by means of indirect heating, i.e. the heating device is not in contact with the material batch. In one embodiment the heating device is an oven, radiation heater or a corresponding heating device arranged to heat the material batch. In one embodiment the heating device is an oven. In one embodiment the oven comprises thermal elements, e.g. electric elements or other suitable devices and elements, by means of which the oven is heated and the material batch is heated with the generated heat. In one embodiment the material batch, such as the material portions, is heated during the collection, such as during piling, of the material batch. In one embodiment the material portions are kept at a desired temperature during the collection of the material batch. In one embodiment the material batch may at intervals be transferred to the heating and brought back for additional material batch formation one or more times during the collection of the material batch. When the material batch is brought back, a material portion or portions may be added thereto.

In one embodiment the material batch is kept on the conveyor at a temperature that is between a glass transition temperature and a melting temperature of the binder of the material portions formed from the starting material. In one embodiment the temperature is 100 - 250 °C, in one embodiment 110 - 190 °C.

In one embodiment the material portions are fed to the conveyor at a suitable temperature, however so that the material portions are not present in a molten state and do not adhere to the surface of the conveyor. In one embodiment the material portions are fed to the conveyor at a temperature below the melting temperature of the binder of the material portions, which temperature may be 110 - 190°C. In one embodiment it is ensured by means of the heating device that the material batch is kept at a desired temperature, such as at a temperature above the glass transition temperature of the binder of the material portions, e.g. at a temperature above 110°C, for the time of being moved on the conveyor. In one embodiment the temperature of the material batch has to be kept at a temperature above 110°C up to the product manufacturing device.

In one embodiment the surface temperature of the material batch is raised higher than the internal temperature of the material batch during the heating to provide good surface quality for the product. In one embodiment the internal temperature of the material batch is higher than the surface temperature.

In one embodiment the possibly generated vapours and odours are collected in connection with the heating. In one embodiment the apparatus comprises at least one device, e.g. a gas collection device, for collecting the vapours and odours in connection with the heating device.

The product is formed from the material batch by the product manufacturing device. In one embodiment the apparatus comprises one product manufacturing device. Alternatively, the apparatus may comprise more than one product manufacturing device, and in that case the product manufacturing devices may have been arranged in parallel, or alternatively the apparatus comprises product manufacturing devices disposed one after the other. In one embodiment the product or a part thereof is formed in one step from the whole material batch. In one embodiment the material batch is directly conducted or transferred to the manufacture of the product, wherein the product is formed from the material batch, e.g. by pressing or by means of heat and pressure. The material batch needed for the product may be determined by means of any attribute, such as based on a dimension, dimensions, a measure, measures or the like, e.g. based on the size, outside measure, volume, indirect volume, length, thickness, weight or another suitable physical quantity. The product manufacturing device may be any manufacturing device known per se, e.g. a device based on casting, a device based on pressure, or a device based on heating and pressure. At the product manufacturing device, the shape for the product may be given by any suitable shape-giving method and/or device. In one embodiment the shape is given to the product by compression moulding in the product manufacturing device. In one embodiment the final shape of the product may be given in manufacturing devices disposed one after the other.

In one embodiment the apparatus comprises at least one second transfer device for transferring the material batch from the conveyor to the product manufacturing device. The second transfer device may be any transfer device suitable for the purpose. In one embodiment the second transfer device is selected from the following devices: computer-controlled transfer device, remote-controlled transfer device, automatic transfer device, belt conveyor, belt sorter, automatic sorter, batcher, robotic device, industrial robot, manipulator or a combination thereof. In one embodiment the second transfer device is a robotic device. In one embodiment the transfer device is independently controllable and movable, e.g. by means of a control device and/or software of the apparatus.

In one embodiment the conveyor, the belt of the conveyor or the final section of the conveyor is withdrawn from under the material batch when the material batch is transferred to the product manufacturing device. Then the material batch may be transferred, e.g. by dropping or by transferring in another way, from the conveyor to the product manufacturing device. In one embodiment the material batch is transferred after the conveyor by means of the second transfer device, e.g. a robotic device, to the product manufacturing device.

In one embodiment the product manufacturing device is placed below the conveyor or alternatively to the side of the conveyor, whereby it is easy and quick to transfer the material batch from the conveyor to the product manufacturing device.

In one embodiment the material batch is measured or weighed, and the material portions, e.g. the mass, length or volume of the material portion, are adjusted based on the measurement result. In one embodiment the apparatus comprises at least one measuring device for measuring or weighing the material batch, and optionally at least one adjusting device for adjusting the material portions based on the material batch measurement result. In one embodiment the measuring device is a weighing device. In one embodiment the adjustment of the material portions is performed by means of automation of the material portions forming device, dispensing device or cutting device, whereby the material portions, such as their size, may be adjusted by means of the measurement result. In one embodiment the material portions are adjusted by means of the automation of the cutting device based on the material batch measurement result so that the cutting length of the material portions is adjusted. In one embodiment the measuring or weighing is done in connection with the conveyor, e.g. at the inlet end of the conveyor. In one embodiment the measuring or weighing is done in connection with a predetermined conveyor section of the conveyor, which conveyor section may have been provided with a measuring device. In one embodiment the measuring or weighing is done in connection with the first transfer device, whereby the measuring device is integrated into the transfer device. In one embodiment the measuring or weighing is done before the product manufacturing device. In one embodiment the measuring or weighing is done when the material batch is fed to the product manufacturing device. In one embodiment the measuring or weighing is done in connection with the second transfer device, whereby the measuring device is integrated into the transfer device. In one embodiment, after the measuring or weighing, the size of the new material portions being formed, e.g. the mass, length or volume of the material portion, is adjusted. In one embodiment the size of the material batch is adjusted by changing the number of the material portions.

In the method and the apparatus, one or more material batches may be transferred at the same time to the manufacture of the product. In one embodiment, one material batch is transferred at a time to the manufacture of the product. In one embodiment, more than one material batch are transferred to the manufacture of one product. In one embodiment, more than one material batch are transferred to the manufacture of several products at the same time. In one embodiment, one material batch is divided in connection with the manufacture of the product, and more than one product are made from one material batch. Preferably, the end product is formed from the material batch or batches or from an intermediate product having been formed by further treatment in a suitable manner. The product being produced by the product manufacturing device may be treated further, e.g. post-processed.

In one embodiment the product having been formed is transferred from the product manufacturing device to storage. In one embodiment the product having been formed is transferred from the product manufacturing device to cooling, e.g. to a cooling device or a cooling station. In one embodiment the product having been formed is transferred from the product manufacturing device to storage or cooling by means of a second conveyor.

The method and the apparatus according to the invention may be used in any manufacture of a product or end product, or in the further treatment of a material formed from a starting material. In one embodiment the method and the apparatus are used in the manufacture of bulk products, composite products, wood-based products and plastic-based products and combinations thereof. In one embodiment the method and the apparatus are used in the manufacture of recycled plastic based and waste plastic based products.

The method and the apparatus according to the invention may be easily utilized in the manufacture of different products. Due to the invention, the efficiency of manufacture may be significantly improved and material loss reduced. With the method and the apparatus according to the invention, a desired amount of material is provided to the manufacture of the product. On the other hand, the material batch, e.g. its size, may be easily and automatically adjusted, for example if the starting material is not homogeneous. The piling of the material batch may be carried out in many ways, the right amount of material is provided in the right places for the product manufacturing device and a suitable material batch may be arranged from the material portions to the manufacture of the product.

The apparatus according to the invention may be easily and cost-efficiently mounted at any point in connection with a product manufacturing line. By means of the method and the apparatus according to the invention, a flexible manufacturing process is provided. Due to the invention, a wide variety of products of different kinds, different sizes and different weights may be flexibly manufactured on the same manufacturing line, and the product being manufactured can be changed quickly.

Further due to the invention, different non-homogeneous materials, also different waste, recycled and side stream materials, may be efficiently and economically utilized as the starting material. The invention enables automatic process adjustment, thus providing homogeneous products from a non-homogeneous material. Specifically due to the invention, end products may also be easily formed from plastic, stiff and soft masses.

### LIST OF THE FIGURES

Fig. 1 illustrates one process according to the invention,
Fig. 2 illustrates another process according to the invention,
Fig. 3 illustrates another process according to the invention, and
Fig. 4 illustrates another process according to the invention.

### EXAMPLES

The invention will now be described by means of detailed examples of its embodiments with reference to the accompanying figures.

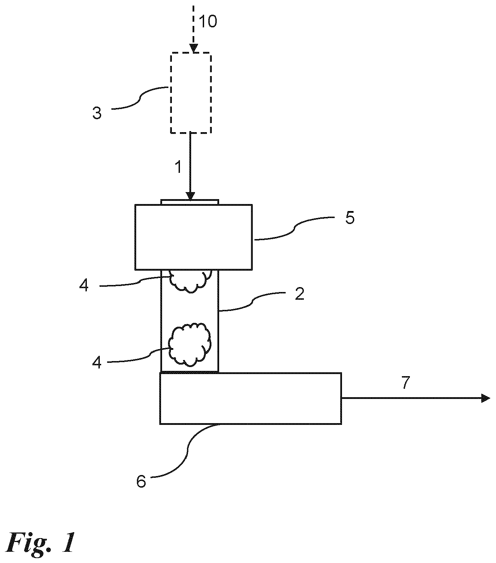

In the process of Fig. 1, material portions (1) are fed to a conveyor (2) to form material batches (4) onto the conveyor. The apparatus of Fig. 1 may comprise a material portions forming device (3) for forming the material portions (1) from a starting material (10) in connection with the process. The forming device may be an extruder or another suitable mixing device forming the material portions for example from a composite starting material by cutting the portions to suitable sizes. The apparatus comprises a conveyor (2) onto which the material batches (4) of desired sizes and shapes are collected from the material portions (1) by arranging them, e.g. by piling or arranging in another way. The conveyor may be formed from more than one conveyor section comprising for example belts. The belts of the conveyor sections are arranged to move so that the material batch (4) is transferred to a product manufacturing device (6). A heating device (5) is arranged in connection with the conveyor, and the conveyor is arranged to move through the heating device to heat the material batch to a desired temperature or to maintain a desired temperature in the material batch. The heating device may be an oven heating the material batch or maintaining the temperature of the material batch during the formation of the material batch. In addition, the apparatus comprises a product manufacturing device (6) which comprises a shape-giving tool and in which a product (7) or a part thereof is formed from the material batch by giving a shape to the product by means of the shape-giving tool.

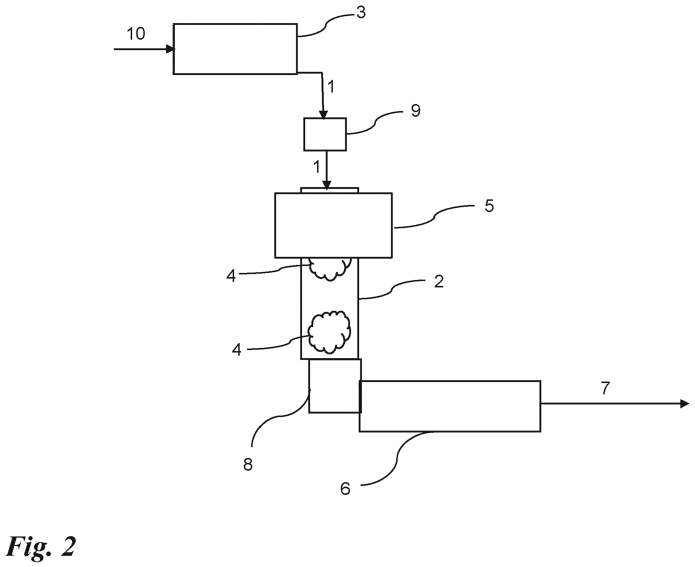

In the process of Fig. 2, the material portions (1) are formed from the starting material (10) in the material portions forming device (3) that may be an extruder or another mixing device. In connection with the material portions forming device (3) there is a cutting device, or the forming device comprises a cutting function for slicing the material portions (1) to suitable sizes. In addition, the apparatus of Fig. 2 comprises a first transfer device (9) that is a robot for transferring the material portions (1) to the conveyor (2) on which the material batches (4) are collected from the material portions (1). Gaps are arranged between the material portions by a gap forming mechanism arranged in connection with the cutting of the material portions. Thus, it is easier to transfer the material portions to the conveyor. The material batches (4) of desired sizes and shapes are collected onto the conveyor (2) by arranging the material portions (1) in a desired manner onto the conveyor, e.g. by piling or arranging in another way. The conveyor may be formed from more than one conveyor section comprising for example belts. The belts of the conveyor sections are arranged to move so that each material batch (4) is transferred to the product manufacturing device (6). A heating device (5) is arranged in connection with the conveyor, and the conveyor is arranged to move through the heating device to heat the material batch to a desired temperature or to maintain a desired temperature in the material batch. The heating device is an oven heating the material batch or maintaining the temperature of the material batch during the formation of the material batch. In addition, the apparatus comprises a product manufacturing device (6) which comprises a shape-giving tool and in which the product (7) or a part thereof is formed from the material batch by giving a shape to the product by means of the shape-giving tool. In addition, the apparatus comprises a second transfer device (8) that is a robot. The material batch may be transferred from the conveyor (2) by means of the second transfer device (8) to the product manufacturing device (6).

In the apparatuses of Fig. 1 and 2, the material portions may be formed continuously, and the material batch may be formed from the material portions for the product and the product or a part thereof may be formed from the material batch.

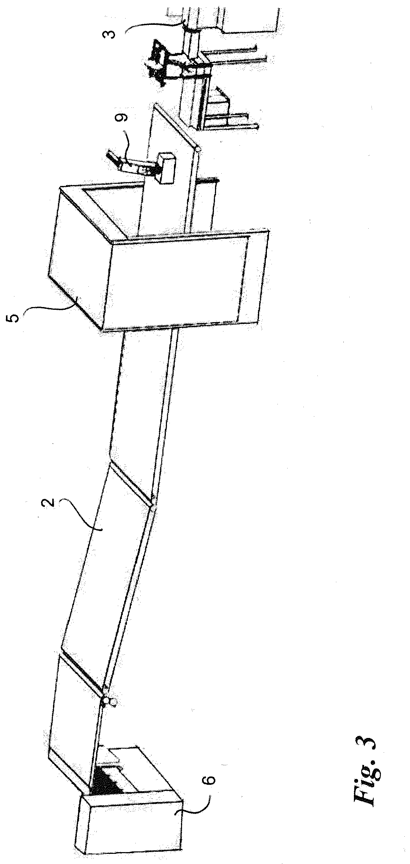

In the apparatus of Fig. 3, the material portions are formed, the material batch is collected from the material portions by arranging them on the conveyor and the material batch is transferred to the manufacture of the product. The apparatus of Fig. 3 comprises an extruder as the material portions forming device (3). In connection with the extruder (3) there is a cutting device for slicing the material portions to suitable sizes. In addition, the apparatus of Fig. 3 comprises a robotic device as the first transfer device (9) for transferring the material portions to the conveyor (2), and the material batch is formed from the material portions onto the conveyor. The conveyor (2) is formed from more than one conveyor section that may comprise belts. An oven is arranged in connection with the conveyor as the heating device (5), and the conveyor is arranged to move through the oven to heat the material batch to a desired temperature or to maintain a desired temperature in the material batch. In addition, the apparatus comprises a product manufacturing device (6) comprising a shape-giving tool for manufacturing the product.

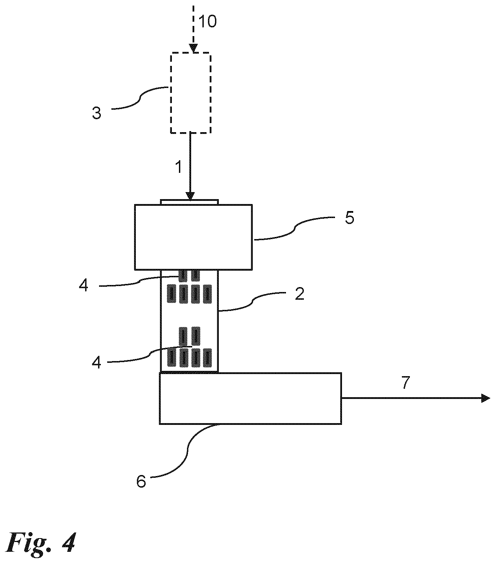

In the apparatus of Fig. 4, the material portions (1) are fed to the conveyor (2) to form the material batches (4) onto the conveyor. The apparatus of Fig. 4 may comprise a material portions forming device (3), e.g. an extruder or another suitable mixing device, for forming the material portions (1) from the starting material (10) in connection with the process. The apparatus comprises a conveyor (2) onto which the material batches (4) of desired sizes and shapes are collected by arranging the material portions (1) in a desired manner and/or in a desired order. The conveyor is arranged to move so that the material batch (4) is transferred to the product manufacturing device (6). A heating device (5) is arranged in connection with the conveyor, and the conveyor is arranged to move through the heating device to heat the material batch to a desired temperature or to maintain a desired temperature in the material batch. The heating device is an oven heating the material batch or maintaining the temperature of the material batch during the formation of the material batch. In addition, the apparatus comprises a product manufacturing device (6) which comprises a shape-giving tool and in which the product (7) or a part thereof is manufactured from the material batch by the shape-giving tool.

### Example 1

In this example, the material portions are formed from the starting material in an extruder. A material flow formed in the extruder is cut by a slicer to form the material portions, and gaps are arranged between the material portions by a gap forming mechanism to facilitate the transfer of the material portions. The cut material portions are transferred by means of the first transfer device, such as a robotic device, to the conveyor. The material portions are present in the form of a stiff or fluid mass, and they are transferred in a warm state to the conveyor to form the material batch. The material batch consists of a predetermined number of material portions collected to form an arrangement or a pile onto the conveyor.

The conveyor is a belt system consisting of several belts disposed one after the other for transferring the material batch to the product manufacturing device. The belts of the conveyor are moved so that the material batch arranged onto the conveyor is transferred upon movement of the belts of the conveyor from the extruder towards the product manufacturing device. The surfaces of the belts may be formed from an anti-adhesive coating.

The conveyor is arranged to move through the heating device, in this embodiment an oven, to heat the material batch to a predetermined temperature and/or to maintain the temperature at the predetermined temperature. The predetermined temperature is defined so that the temperature is between a glass transition temperature and a melting temperature of the material portions formed from the starting material, e.g. 110 - 190 °C. The heating device is in this example placed so that it surrounds the inlet end of the conveyor and extends to a distance from the inlet end of the conveyor towards the outlet end of the conveyor of the total length of the conveyor. The material batch may be heated during the collection thereof, when the material portions are collected onto the conveyor to form the material batch. A conveyor section of the conveyor may be moved in a reciprocating manner between the oven and the point of forming the material batch so that the material batch is at intervals transferred to the heating and brought back for additional material batch formation, whereby a material portion or portions may be added to the material batch. This may be repeated one or more times during the collection of the material batch.

The warm material batches are transferred by means of the conveyor to the product manufacturing device. The material batch may be transferred from the conveyor to the product manufacturing device by means of the second transfer device, e.g. by means of a robotic device. Alternatively, the material batch may be directly transferred from the conveyor to the product manufacturing device by drawing or bending the final belt of the conveyor away from under the material batch and thus transferring the material batch to the manufacturing device.

The method and apparatus according to the invention are suitable as different embodiments to be used in a variety of applications to form a product from a variety of starting materials.

The invention is not limited merely to the above-described examples, but many modifications are possible within the scope of the inventive idea defined by the claims.

## Claims

1. A method for manufacturing a product from a starting material, **characterized in that** at least one material batch is collected onto a conveyor from material portions, the conveyor is arranged to move through a heating device to heat the material batch to a desired temperature and/or to maintain a desired temperature in the material batch, the conveyor is moved to transfer the material batch to a product manufacturing device in which the product is manufactured from the material batch by a shape-giving tool.

2. The method according to claim 1, **characterized in that** the material portions are formed by a material portions forming device by treating the starting material by means of heat and/or extrusion and by cutting the material portions from the material having been formed.

3. The method according to claim 1 or 2, **characterized in that** the heating device is an oven or a radiation heater arranged to heat the material batch.

4. The method according to any one of claims 1 - 3, **characterized in that** the material batch is heated during the collection of the material batch.

5. The method according to any one of claims 1 - 4, **characterized in that** the material batch is kept on the conveyor at a temperature that is between a glass transition temperature and a melting temperature of a binder of the material portions formed from the starting material.

6. The method according to any one of claims 1 - 5, **characterized in that** the material portions are transferred to the conveyor by means of a first transfer device.

7. The method according to any one of claims 1 - 6, **characterized in that** the material batch is measured or weighed, and the material portions are adjusted based on the measurement result.

8. An apparatus for manufacturing a product from a starting material, **characterized in that** the apparatus comprises
- at least one conveyor (2) onto which at least one material batch (4) is collected from material portions (1) and which is moved to transfer the material batch to a product manufacturing device (6),
- at least one heating device (5) through which the conveyor is arranged to move to heat the material batch to a desired temperature and/or to maintain a desired temperature in the material batch,
- and at least one product manufacturing device (6) which comprises at least a shape-giving tool and in which the product is manufactured from the material batch by the shape-giving tool.

9. The apparatus according to claim 8, **characterized in that** the heating device (5) is an oven or a radiation heater arranged to heat the material batch.

10. The apparatus according to claim 8 or 9, **characterized in that** the apparatus comprises at least one material portions forming device (3) for forming the material portions from a starting material (10) .

11. The apparatus according to any one of claims 8 - 10, **characterized in that** the apparatus comprises at least one cutting device for forming the material portions (1).

12. The apparatus according to any one of claims 8 - 11, **characterized in that** the conveyor (2) is selected from the following: a movable surface, belt, belt system, conveyor belt, corresponding conveyor device or a combination thereof which is movable to transfer the material batch to the product manufacturing device.

13. The apparatus according to any one of claims 8 - 12, **characterized in that** the conveyor (2) is formed from more than one conveyor sections arranged one after the other to form a continuous conveyor.

14. The apparatus according to any one of claims 8 - 13, **characterized in that** the apparatus comprises at least one first transfer device (9) that is arranged to transfer the material portions (1) onto the conveyor (2).

15. The apparatus according to any one of claims 8 - 14, **characterized in that** the apparatus comprises at least one second transfer device (8) for transferring the material batch (4) from the conveyor (2) to the product manufacturing device (6).

16. The apparatus according to any one of claims 8 - 15, **characterized in that** the first (9) and/or the second (8) transfer device is selected from the following: computer-controlled transfer device, remote-controlled transfer device, automatic transfer device, belt conveyor, belt sorter, automatic sorter, batcher, robotic device, industrial robot, manipulator or a combination thereof.

17. The apparatus according to any one of claims 8 - 16, **characterized in that** the apparatus comprises at least one measuring device for measuring or weighing the material batch (4), and optionally at least one adjusting device for adjusting the material portions (1) based on the material batch measurement result.

18. Use of the method according to any one of claims 1 - 7, **characterized in that** the method is used in the manufacture of bulk products, composite products, wood-based products and plastic-based products and combinations thereof.
